(19) Europäisches Patentamt
European Patent Office
Office européen des brevets

(11) **EP 3 432 054 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(51) Int Cl.:
***G02B 27/09*** *(2006.01)*

(21) Anmeldenummer: **18181087.0**

(22) Anmeldetag: **02.07.2018**

(54) **STRAHLFORMER MIT OPTISCHEN FREIFORMFLÄCHEN UND LASEROPTIK MIT EINEM SOLCHEN STRAHLFORMER**

BEAMFORMER WITH OPTICAL FREEFORM SURFACES AND LASER OPTICS WITH SUCH A BEAMFORMER

DISPOSITIF GÉNÉRATEUR DE FAISCEAU POURVU DE SURFACES DE FORME LIBRE OPTIQUES ET OPTIQUE LASER POURVUE D'UN TEL DISPOSITIF GÉNÉRATEUR DE FAISCEAU

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **21.07.2017 DE 102017116476**

(43) Veröffentlichungstag der Anmeldung:
**23.01.2019 Patentblatt 2019/04**

(73) Patentinhaber: **asphericon GmbH**
**07747 Jena (DE)**

(72) Erfinder:
- **FUCHS Dr., Ulrike**
  **07745 Jena (DE)**
- **WICKENHAGEN, Sven**
  **07747 Jena (DE)**
- **KIONTKE, Sven**
  **07743 Jena (DE)**

(74) Vertreter: **Liedtke & Partner Patentanwälte**
**Gerhart-Hauptmann-Straße 10/11**
**99096 Erfurt (DE)**

(56) Entgegenhaltungen:
- **THOMAS J. SULESKI ET AL: "Design of Dynamic Freeform Optics", RENEWABLE ENERGY AND THE ENVIRONMENT, 1. Januar 2013 (2013-01-01), Seite FW2B.2, XP055524755, Washington, D.C. DOI: 10.1364/FREEFORM.2013.FW2B.2 ISBN: 978-1-55752-986-2**
- **PAUL J SMILIE AND THOMAS J SULESKI: "Variable-diameter refractive beam shaping with freeform optical surfaces", OPTICS LETTERS, OPTICAL SOCIETY OF AMERICA, US, Bd. 36, Nr. 21, 1. November 2011 (2011-11-01), Seiten 4170-4172, XP001570736, ISSN: 0146-9592, DOI: 10.1364/OL.36.004170 [gefunden am 2011-10-19]**
- **SULESKI THOMAS J ET AL: "Dynamic beam shaping with freeform optics", VISUAL COMMUNICATIONS AND IMAGE PROCESSING; 20-1-2004 - 20-1-2004; SAN JOSE,, Bd. 9194, 25. September 2014 (2014-09-25), Seiten 91940K-91940K, XP060040481, DOI: 10.1117/12.2062986 ISBN: 978-1-62841-730-2**
- **PALUSINSKI I A ET AL: "LATERAL-SHIFT VARIABLE ABERRATION GENERATORS", APPLIED OPTICS, OPTICAL SOCIETY OF AMERICA, WASHINGTON, DC, US, vol. 38, no. 1, 1 January 1999 (1999-01-01), pages 86-90, XP000791919, ISSN: 0003-6935, DOI: 10.1364/AO.38.000086**
- **ADRIAN GREWE ET AL: "Aberration analysis of optimized Alvarez-Lohmann lenses", APPLIED OPTICS, OPTICAL SOCIETY OF AMERICA, WASHINGTON, DC, US, vol. 53, no. 31, 1 November 2014 (2014-11-01), pages 7498-7506, XP001592693, ISSN: 0003-6935, DOI: 10.1364/AO.53.007498 [retrieved on 2014-10-30]**

**Beschreibung**

Die Erfindung betrifft einen Strahlformer mit senkrecht zur optischen Achse bewegbaren optischen Freiformflächen zur Erzeugung eines rechteckigen Strahldichteprofils. Ein rechteckiges Strahldichteprofil weist innerhalb eines rechteckigen Querschnitts um und senkrecht zu einer optischen Achse eine homogene Strahldichte auf. Außerhalb des rechteckigen Querschnitts weist ein rechteckiges Strahldichteprofil keine oder eine vernachlässigbar geringe Strahldichte auf.

Aus dem Stand der Technik sind Strahlformer bekannt, mit denen Bündel von kollimierten Eintrittsstrahlen, deren Verteilung in einer zur optischen Achse senkrechten Eintrittsebene durch eine Eintrittsstrahldichteverteilung bestimmt ist, in Bündel von kollimierten Austrittsstrahlen transformiert werden, deren Verteilung in einer zur optischen Achse senkrechten Austrittsebene durch eine Austrittsstrahldichteverteilung bestimmt ist. Beispielsweise sind Strahlformer bekannt, bei denen die Eintrittsstrahldichteverteilung durch ein rotationssymmetrisches Gaußprofil und die Austrittsstrahldichteverteilung durch ein rotationssymmetrisches Top-Hat-Profil bestimmt sind.

Aus dem Stand der Technik sind ferner fokussierende variooptische Systeme bekannt, deren Brennweite entlang der in eine Richtung z weisenden optischen Achse dadurch veränderbar ist, dass zwei optische Elemente mit Teilflächen in einer Richtung x senkrecht zur optischen Achse verschoben werden, wobei die Teilflächen als Freiformflächen ausgebildet sind. Es ist bekannt, dass zwei gleich geformte, sich entlang der zueinander und zur optischen Achse z senkrechten Richtungen $x, y$ erstreckende, um einen Abstand $\varepsilon$ in Richtung der optischen Achse $z$ beabstandete Teilflächen

$$z^{(1)}(x,y) = A\left(\frac{x^3}{3} + xy^2\right)$$

$$z^{(2)}(x,y) = A\left(\frac{x^3}{3} + xy^2\right) + \varepsilon$$

eine Änderung der Brennweite bewirken.

Die Brennweite bei einer Verschiebung um $\Delta x$ entlang der x-Achse beträgt

$$f = \frac{1}{4\,A\,\Delta x\,(n-1)}$$

wobei n der Brechungsindex des für beide optischen Elemente gleichen Materials ist und der freie Strahldurchgang zwischen den optischen Elementen in Luft erfolgt.

Die Veröffentlichung T. J. Suleski, J. A. Shultz, P. J. Smilie: Design of Dynamic Freeform Optics, Renewable Energy and the Environment, 2013, DOI 10.1364/FREEFORM.2013.FW2B.2, ISBN 978-1-55752-986-2 beschreibt ein System mit mehreren optischen Elementen mit jeweils mindestens einer Freiformfläche. Die optischen Elemente sind gegeneinander beweglich, um eine veränderbare optische Funktion bereitzustellen.

Die Veröffentlichung P. J. Smilie, T. J. Suleski: Variable-diameter refractive beam shaping with freeform optical surfaces. Optics Letters Vol. 36, No. 21, November 2011, Seiten 4170 - 4172, DOI 10.1364/OL.36.004170, ISSN 0146-9592 beschreibt ein refraktives optisches System umfassend zwei optische Elemente mit je einer Freiformfläche höherer Ordnung, welches ein gaußförmiges Strahldichteprofil eines eintretenden Laserstrahls in ein homogenes (flat-top) Strahldichteprofil in einer vorbestimmten austrittsseitigen Entfernung umwandelt, wobei die geometrische Ausdehnung des austretenden homogenen Strahldichteprofils variierbar ist.

Die Veröffentlichung T. J. Suleski, J. A. Shultz, P. J. Smilie: Dynamic beam shaping with freeform optics. Visual Communications and Image Processing, Bd. 9194, 2014, DOI 10.1117/12.2062986, ISB 978-1-62841-730-2 beschreibt den Entwurf dynamischer optischer Strahlformer mittels Freiformflächen. Mittels kleiner, gesteuerter Bewegungen der Freiformflächen relativ zueinander können dynamisch Änderungen der optischen Funktion bewirkt werden. Dadurch können variable und kompakte Strahlformer bereitgestellt werden.

Die Veröffentlichung Palusinski et al. "Lateral-shift variable aberration generators" APPLIED OPTICS, OPTICAL SOCIETY OF AMERICA, Washington, DC, US, Bd. 38, Nr. 1, 1. Januar 1999 (1999-01-01), Seiten 86-90, XP000791919, ISSN: 0003-6935, DOI: 10.1364/AO.38.000086 beschreibt ein optisches Gerät zur Erzeugung von Wellenfrontaberrationen und beschreibt das Phänomen induzierter Aberrationen an realen Alvarez - Linsen.

Die Veröffentlichung Grewe, A. et al.: "Aberration analysis of optimized Alvarez - Lohmann lenses", APPLIED OPTICS, OPTICAL SOCIETY OF AMERICA, Washington, DC, US, Bd. 53, Nr. 31,1. November 2014 (2014-11-01), Seiten 7498-7506, XP001592693, ISSN: 0003-6935, DOI:10.1364/AO.53.007498 analysiert Aberrationen an Alvarez - Lohmann Linsen und beschreibt ein halbautomatisches Verfahren zur Korrektur solcher Aberrationen.

Der Erfindung liegt die Aufgabe zu Grunde, einen Strahlformer anzugeben, mit welchem kollimierte Eintrittsstrahlen mit einer Eintrittsstrahldichteverteilung entsprechend einem rotationssymmetrischen Gaußprofil in Austrittsstrahlen transformiert werden, deren Austrittsstrahldichte in einer Auffangebene einem rechteckigen Strahldichteprofil folgt, das mindestens entlang einer Abmessung variabel ist. Der Erfindung liegt insbesondere die Aufgabe zu Grunde, einen solchen Strahlformer anzugeben, der eine besonders kurze Baulänge ermöglicht. Der Erfindung liegt ferner die Aufgabe zu Grunde, eine Laseroptik für die Lasermaterialbearbeitung mit verbesserter Bearbeitungsqualität anzugeben, die besonders einfach für verschiedene Strahldichten und/oder für verschiedene Arbeitsabstände anpassbar ist.

Die Aufgabe wird hinsichtlich des Strahlformers erfindungsgemäß durch einen Strahlformer mit den Merkmalen des Anspruchs 1 gelöst. Hinsichtlich der Laseroptik wird die Aufgabe erfindungsgemäß durch eine Laseroptik mit den Merkmalen des Anspruchs 5 gelöst.

Vorteilhafte Ausgestaltungen der Erfindung sind Gegenstand der Unteransprüche.

Ein Strahlformer weist mindestens ein erstes optisches Element und ein entlang einer optischen Achse nach dem ersten optischen Element angeordnetes zweites optisches Element auf. Das erste und das zweite optische Element sind gegeneinander entlang mindestens einer Verschiebungsachse verschiebbar, die senkrecht zur optischen Achse angeordnet ist.

Das erste und das zweite optische Element weisen jeweils mindestens eine optisch wirksame Freiformfläche auf. Jede Freiformfläche ist durch ein Höhenprofil beschreibbar, welches jedem Punkt der Freiformfläche eine Höhendifferenz als Abstand in Richtung der optischen Achse bezogen auf einen Referenzpunkt der Freiformfläche zuordnet. Vorzugsweise ist ein Referenzpunkt so gewählt, dass er mittig in einer Freiformfläche liegt.

Für jede Verschiebung des ersten relativ zum zweiten optischen Element ergibt sich die optische Wirkung des Strahlformers durch die Gesamt der für jeden eingehenden Eintrittsstrahlen jeweils bewirkten Änderung des Strahlverlaufs. Für optische Elemente mit gegebenen Freiformflächen ist die optische Wirkung eines Strahlformers mittels Strahldurchrechnung mit innerhalb der Grenzen der geometrischen Optik prinzipiell beliebigen Genauigkeit bestimmbar. Verfahren zur Strahldurchrechnung für optische Elemente mit Freiformflächen sind aus dem Stand der Technik bekannt.

Das Höhenprofil einer Freiformfläche ist mit einer Polynomentwicklung beschreibbar, die in endlich vielen Polynomordnungen von Null verschiedene Polynomkoeffizienten aufweist, wobei mindestens ein einer Polynomordnung größer als Drei zugeordneter Polynomkoeffizient von Null verschieden ist.

Die Polynomkoeffizienten einer solchen Polynomentwicklung für jede der Freiformflächen der optischen Elemente werden so gewählt, dass die Strahldichteverteilung in einer austrittsseitig vom Strahlformer in einem Fokusabstand angeordneten Auffangebene einem rechteckigen Strahldichteprofil folgt, wobei der Fokusabstand sowie die Ausdehnung des rechteckigen Strahldichteprofils abhängig von der Verschiebung des ersten relativ zum zweiten optischen Element variierbar ist.

Bei einer weiteren Ausführungsform der Erfindung sind jeweils eine Freiformfläche des ersten und des zweiten optischen Elements entlang der optischen Achse aufeinander zuweisend angeordnet, wobei das Höhenprofil dieser Freiformflächen antisymmetrisch bezüglich einer Drehung um 180 Grad um die optische Achse ausgebildet ist.

Diese Ausführungsform bietet den Vorteil, dass das erste und das zweite optische Element gleichartig gefertigt sind und lediglich relativ zueinander um 180 Grad um die optische Achse gedreht in dem Strahlformer einzubauen sind. Dadurch verringert sich der Aufwand für die Herstellung des Strahlformers.

Bei einer weiteren Ausführungsform der Erfindung sind die optischen Elemente aus Kieselglas gefertigt. Kieselglas ist besonders temperaturwechselbeständig und weist einen geringen thermischen Ausdehnungskoeffizienten auf. Diese Ausführungsform eignet sich daher besonders für die Strahlformung von Laserstrahlen bei hohen Laserleistungen. Bei einer bevorzugten Variante dieser Ausführungsform sind zudem optisch wirksame Flächen der optischen Elemente mit einer Antireflex - Beschichtung versehen, um optische Verluste und deren Umwandlung in Wärme zu reduzieren.

Ausführungsbeispiele der Erfindung werden im Folgenden anhand von Zeichnungen näher erläutert.

Darin zeigen:

Figur 1 schematisch zwei optische Elemente mit Freiformflächen in Nullposition,

Figur 2 schematisch ein Oberflächenprofil einer Freiformfläche,

Figur 3 schematisch zwei zueinander verschobene optische Elemente mit Freiformflächen,

Figuren 4A, 4B schematisch Strahlverläufe für einen Strahlformer mit zwei Freiformflächen für verschiedene Verschiebelagen,

Figur 5 schematisch die Zuordnung von Eintrittsorten in einer Eintrittsebene zu Auffangorten in einer Auffangebene für Strahlen durch einen Strahlformer sowie

Figur 6 schematisch eine Laseroptik mit einem Strahlformer.

Einander entsprechende Teile sind in allen Figuren mit den gleichen Bezugzeichen versehen.

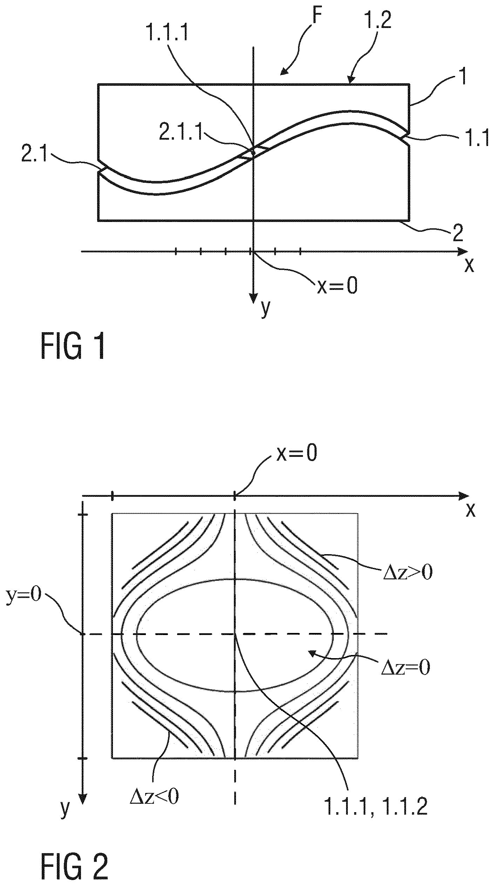

**Figur 1** zeigt ein Strahlformer F mit einem ersten optischen Element 1 und einem zweiten optischen Element 2 aus einem optisch dichten Material mit einem Brechungsindex $n > 1$. Die optischen Elemente 1, 2 weisen Freiformflächen 1.1, 2.1 auf, die entlang einer optischen Achse $z$ gegenüberliegend angeordnet sind. Die optischen Elemente 1, 2 sind entlang einer ersten, zur optischen Achse $z$ senkrechten horizontalen Achse $x$ zueinander verschiebbar und entlang einer zweiten, sowohl zur optischen Achse $z$ als auch zur ersten Achse $x$ senkrechten Achse $y$ zueinander unbeweglich angeordnet. Es sind jedoch auch Ausführungsbeispiele der Erfindung möglich, bei welchen die optischen Elemente 1, 2 zusätzlich entlang der zweiten Achse $y$ verschiebbar sind.

Mechanische Vorrichtungen für die senkrecht zur optischen Achse $z$ verschiebbare Anordnung optischer Elemente sind aus dem Stand der Technik bekannt. Beispielsweise können die optischen Elemente 1, 2 in nicht näher dargestellten Fassungen gefasst sein, welche über eine Spindelschraube in $x$ - Richtung gegeneinander verschiebbar sind. Es sind Lösungen bekannt, mit denen die optischen Elemente 1, 2 in $x$ - Richtung zueinander sowie jeweils zur optischen Achse $z$ verschiebbar sind. Es ist aber auch möglich, dass ein erstes optisches Element 1 unbeweglich zur optischen Achse z angeordnet ist und das andere optische Element 2 gegenüber der optischen Achse $z$, und somit auch gegenüber dem ersten optischen Element 1 in $x$ - Richtung verschiebbar ist.

Jedes optische Element 1, 2 weist seiner Freiformfläche 1.1, 2.1 gegenüberliegend eine Planfläche 1.2, 2.2 auf, die senkrecht zur optischen Achse $z$ liegt. Es sind aber auch Ausführungsformen der Erfindung möglich, bei denen die der Freiformfläche 1.1, 1.2 gegenüberliegende Fläche nicht plan geformt ist. Ferner sind Ausführungsformen möglich, bei denen die Planflächen 1.2, 2.2 der optischen Elemente einander gegenüberliegend angeordnet sind und die Freiformflächen 1.1, 2.1 voneinander wegweisend angeordnet sind.

Die Freiformflächen 1.1, 2.1 sind komplementär geformt und in einer Nullposition um einen Versatz $\varepsilon$ entlang der optischen Achse $z$ beabstandet nacheinander angeordnet, wobei die erste Freiformfläche 1.1 als Funktion

$$z^{(1)}(x, y) = f(x, y)$$

und die zweite Freiformfläche 2.1 als Funktion

$$z^{(2)}(x, y) = f(x, y) + \varepsilon$$

beschreibbar sind.

**Figur 2** zeigt schematisch das Höhenprofil

$$\Delta z(x, y) = z^{(1)}(x, y) - f(0, 0) = z^{(2)}(x, y) - f(0, 0) - \varepsilon$$

für die Freiformflächen 1.1, 2.1 bezogen auf die Mittenhöhe am jeweiligen Referenzpunkt 1.1.1, 2.1.1, der als Durchstoßpunkt $x = 0$, $y = 0$ der optischen se $z$ in der Freiformfläche 1.1, 21 definiert ist. Das Höhenprofil $\Delta z(x, y)$ beschreibt somit die Änderung der Höhe einer Freiformfläche 1.1, 2.1 entlang der optischen Achse $z$ in Abhängigkeit von kartesischen Koordinaten $x$, $y$, die senkrecht zu dieser optischen Achse $z$ liegen, wobei diese Höhenänderung relativ zu dem Referenzpunkt $x = 0$, $y = 0$ angegeben wird.

Die optischen Elemente 1, 2 weisen einen kreisrunden Querschnitt in der $x, y$ - Ebene auf. Es sind jedoch auch Ausführungsbeispiele mit einer anderen Querschnittsgeometrie möglich.

In einer bevorzugten Ausführungsform der Erfindung sind die Freiformflächen 1.1, 2.1 antisymmetrisch ausgebildet, wobei

$$\Delta z(x, y) = -\Delta z(-x, -y).$$

Dann weisen die optischen Elemente 1, 2 die gleiche Bauform auf, sind jedoch um die optische Achse $z$ um 180° gedreht mit den Freiformflächen 1.1, 2.1 aufeinander zuweisend angeordnet und bilden somit ein komplementäres Paar von Freiformflächen 1.1, 2.1.

Das Höhenprofil der Freiformflächen 1.1, 2.1 kann durch eine von den lateralen Abständen *x, y* relativ zur optischen Achse *z* abhängige Polynomentwicklung für kartesische Koordinaten der Form

$$\widehat{\Delta z}(x,y) = \sum_{m=1}^{M} \sum_{n=1}^{N} c_{m,n}\, x^m\, y^n$$

beschrieben werden. Daneben sind Polynomentwicklungen für andere Koordinatensysteme, beispielsweise für Polarkoordinaten, möglich. Die Überführung einer Polynomentwicklungen für kartesische Koordinaten in eine Polynomentwicklung für ein anderes Koordinatensystem ist aus dem Stand der Technik bekannt.

Erfindungsgemäß ist mindestens eine der Polynomordnungen *M, N* größer als 3 gewählt.

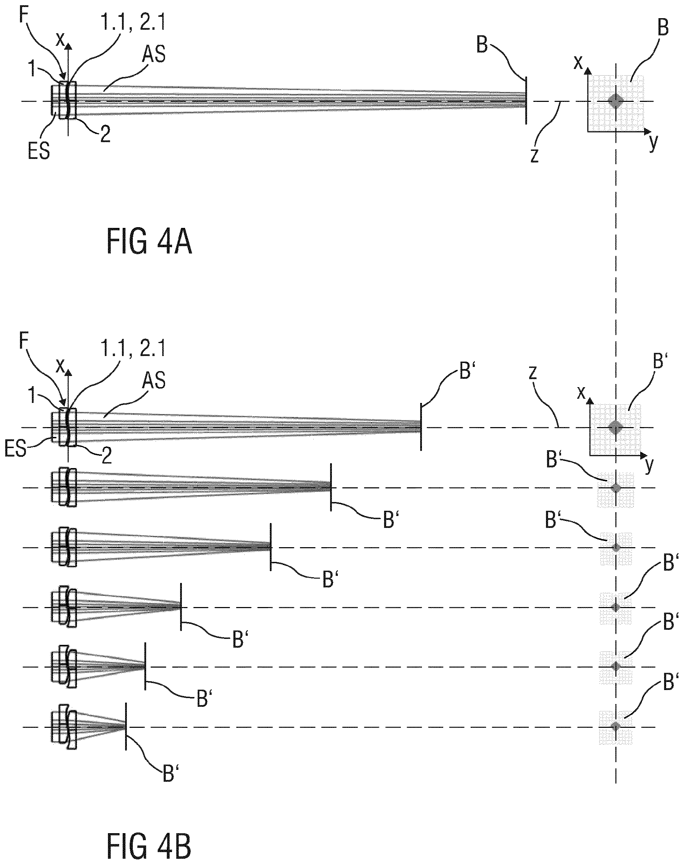

In der in Figur 1 dargestellten Anordnung in Nullposition, also bei einem horizontalen Versatz $\Delta x = 0$, liegen die Referenzpunkte 1.1.1, 2.1.1 entlang der *x*-Achse und der *y*-Achse deckungsgleich und entlang der optischen Achse *z* um den Versatz $\varepsilon$ beabstandet zueinander. In dieser Nullposition werden zur optischen se *z* kollimierte, nach einem Gaußprofil verteilte Eingangsstrahlen ES in der Strahlrichtung beim Durchgang durch den Strahlformer F so abgelenkt, dass austrittsseitig vom Strahlformer F in einer Auffangebene B aufgefangene Austrittsstrahlen AS nach einem rechteckigen Strahldichteprofil verteilt sind, wie in **Figur 4A** schematisch dargestellt. Vorliegend ist das rechteckige Strahldichteprofil ohne Beschränkung der Allgemeinheit quadratisch ausgebildet.

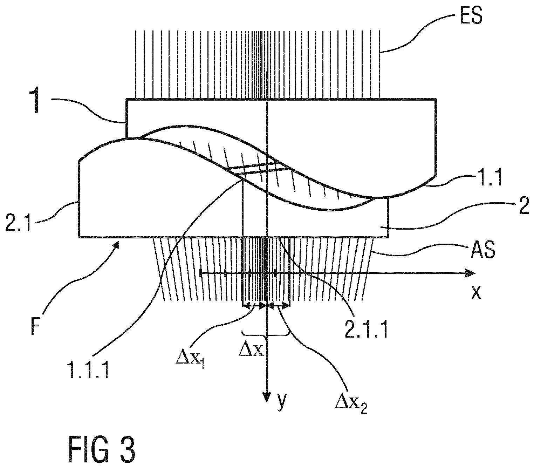

Wie in **Figur 3** schematisch dargestellt, können die optischen Elemente 1, 2 beim erfindungsgemäßen Strahlformer F entlang der *x* - Achse senkrecht zur optischen Achse *z* gegeneinander verschoben und somit aus der Nullposition gebracht werden. Eine Verschiebung des ersten optischen Elements 1 um einen ersten Versatz $\Delta x_1$ bewirkt eine erste Freiformfläche 1.1 nach der Funktion

$$z^{(1)}(x,y) = f(x - \Delta x_1, y).$$

Eine Verschiebung des zweiten optischen Elements 2 um einen zweiten Versatz $\Delta x_2$ bewirkt eine zweite Freiformfläche 2.1 nach der Funktion

$$z^{(2)}(x,y) = f(x - \Delta x_2, y) + \varepsilon.$$

Für die optische Wirkung ist dabei nur die relative Verschiebung $\Delta x = \Delta x_1 - \Delta x_2$ zwischen den Freiformflächen 1.1, 2.1 wesentlich, da eine gleichartige Verschiebung beider optischer Elemente 1, 2 lediglich einen Versatz der optischen Achse *z* bewirkt.

Die relative Verschiebung $\Delta x$ bewirkt, bei unverändert gaußförmiger Eintrittsstrahldichteverteilung, eine Veränderung in Lage und Richtung potentiell jeden Austrittsstrahls AS. Insbesondere bewirkt die relative Verschiebung $\Delta x$, dass sich eine rechteckige Strahldichteverteilung in einer Auffangebene B' einstellt, die gegenüber der Auffangebene B für die Nullposition $\Delta x = 0$ entlang der optischen Achse *z* verschoben ist. Die relative Verschiebung $\Delta x$ kann ferner bewirken, dass in der verschobenen Auffangebene B' eine rechteckige Strahldichteverteilung mit einer gegenüber der Nullposition veränderten Abmessung und somit auch mit einer veränderten Strahldichte entsteht.

Die abhängig vom der relativen Verschiebung $\Delta x$ bewirkte Lage der Auffangebene B' und Abmessung der rechteckigen Strahldichteverteilung ist in der Figur 4B schematisch für verschiedene Verschiebungen $\Delta x \neq 0$ dargestellt.

Das Problem, ein Höhenprofil $\Delta z(x, y)$ für die Freiformflächen 1.1, 2.1 dergestalt zu ermitteln, dass eine gewünschte optische Wirkung in Abhängigkeit von einer relativen Verschiebung $\Delta x$ erzielt wird, kann so formuliert werden, dass für eine Vielzahl von Strahlen S mit Eintrittsorten $x_S, y_S$ in einer Eintrittsebene korrespondierende Auffangorte $x_S'$, $y_S'$ für die gedachte Auffangebene B, B' festgelegt werden, die der gewünschten optischen Wirkung oder Strahlformung entsprechen. Aus der Menge von Eintrittsorten $x_S, y_S$ und zugeordneten Auffangorten $x_S'$, $y_S'$ können mittels Strahldurchrechnung für eine Vielzahl von relativen Verschiebungen $\Delta x$ Stützstellen für ein Höhenprofil $\Delta z(x, y)$ ermittelt werden, mit welchem die gewünschten Verläufe der Strahlen S erzielt werden.

Verfahren zur numerischen Ermittlung von Stützstellen für ein Höhenprofil $\Delta z(x, y)$ und, daraus abgeleitet, für die numerische Ermittlung des Höhenprofils $\Delta z(x, y)$ selbst sind aus dem Stand der Technik bekannt. Insbesondere sind Verfahren bekannt, mit denen sich Koeffizienten $c_{m,n}$ einer Polynomentwicklung $\widehat{\Delta z}(x, y)$ für gegebene Polynomord-

nungen $M, N$ ermitteln lassen, die eine Näherung des Höhenprofils $\Delta z(x, y)$ darstellt.

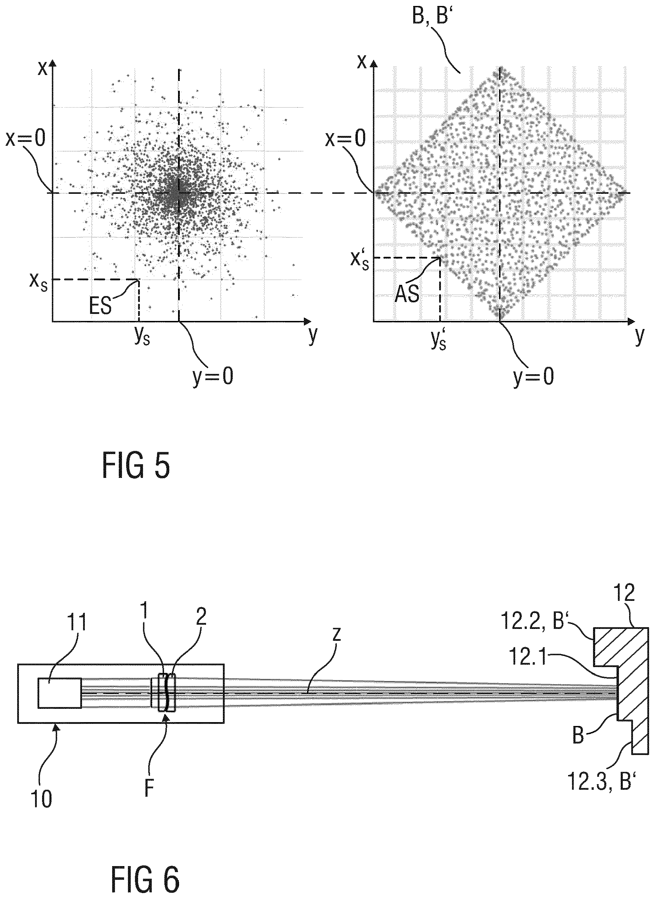

Beispielsweise können für eine relative Verschiebung $\Delta x = 0$ Eintrittsorte $x_S, y_S$, die gemäß einer gaußförmigen rotationssymmetrischen Strahldichte in einer Eintrittsebene verteilt sind, Auffangorte $x'_S, y'_S$ ein einer Auffangebene B zugeordnet werden, die im Wesentlichen gleichförmig innerhalb eines quadratischen Querschnitts um die optische Achse ($z$) verteilt sind, wie in **Figur 5** schematisch dargestellt.

In analoger Weise können für relative Verschiebungen $\Delta x > 0$ gaußförmig in der Eintrittsebene verteilte Eintrittsorte $x_S, y_S$ ebenfalls gleichförmig, jedoch mit verringerten Abständen verteilte Auffangorte $x'_S, y'_S$ einer Auffangebene B' zugewiesen werden, wobei diese Auffangebene B' mit zunehmender Dichte der Auffangorte $x'_S, y'_S$ näher an den Strahlformer F rückt. Die optische Wirkung einer aus einer Nullposition herauszunehmenden relativen Verschiebung $\Delta x$ ist in **Figur 4B** schematisch dargestellt. Diese optische Wirkung entspricht einer mit zunehmender relativer Verschiebung $\Delta x > 0$ ebenfalls zunehmende Strahldichte, die innerhalb des rechteckigen Querschnitts in der jeweiligen, von der relativen Verschiebung $\Delta x$ bestimmten Auffangebene B' homogen ist.

Mittels eines Strahlformers F mit derartiger optischer Wirkung ist es beispielsweise möglich, den aus einer Laserquelle austretenden Laserstrahl mit einer im Allgemeinen näherungsweise rotationssymmetrisch gaußförmig verteilten Strahldichte in eine gleichförmig verteilte Strahldichte mit rechteckigem oder quadratischem Querschnitt um die optische Achse ($z$) zu transformieren. Eine solche gleichförmige Strahldichteverteilung weist gegenüber einer gaußförmigen Strahldichteverteilung insbesondere für die Materialbearbeitung mittels Laser viele Vorteile auf, beispielsweise einen gleichmäßigen, scharf begrenzten Materialabtrag.

**Figur 6** zeigt schematisch eine Laseroptik 10 mit einer Laserquelle 11 und einem Strahlformer F. Die Laserquelle 11 ist zur Abgabe von Laserlicht eingerichtet, das zu einer optischen Achse $z$ kollimiert ist und eine gaußförmiges, zur optischen Achse $z$ rotationssymmetrisches Strahldichteprofil aufweist.

Entlang der optischen Achse $z$ nachgeordnet ist ein erfindungsgemäßer Strahlformer F mit einem ersten und einem zweiten optischen Element 1, 2. In den von der relativen Verschiebung $\Delta x$ der optischen Elemente 1, 2 zueinander abhängigen Auffangeben B, B' sind Bearbeitungsflächen 12.1, 12.2, 12.3 eines Werkstücks 12 angeordnet. Dabei liegt eine erste Bearbeitungsfläche 12.1 in der Auffangebene B der Nullposition, die sich für nicht verschobene ($\Delta x = 0$) optische Elemente 1, 2 ergibt. Eine zweite Bearbeitungsfläche 12.2 liegt in einer Auffangebene B', die sich für eine positive relative Verschiebung $\Delta x > 0$ ergibt. Eine dritte Bearbeitungsfläche 12.3 liegt in einer Auffangebene B', die sich für eine negative relative Verschiebung $\Delta x < 0$ ergibt.

Somit kann durch Anpassung der relativen Verschiebung $\Delta x$ eine stets gleichförmige oder homogene Strahldichteverteilung für verschiedene Arbeitsabstände zwischen der Laseroptik 10 und einem Werkstück 11 erzielt werden.

Zusätzlich oder alternativ ist es auch möglich, durch Anpassung der relativen Verschiebung $\Delta x$ zwischen den optischen Elementen den Umfang des rechteckigen Querschnitts der gleichförmigen Strahldichteverteilung zu verändern und zugleich eine Bearbeitungsfläche 12.1, 12.2, 12.3 des Werkstücks 12 durch Verfahren entlang der optischen Achse $z$ mit der jeweils entsprechenden Auffangebene B, B' in Überdeckung zu bringen. Dadurch ist es möglich, die Strahldichte einer homogenen Strahldichteverteilung mit rechteckigem Querschnitt zu verändern. In besonders einfacher Weise ist somit beispielsweise die Veränderung einer Abtragsrate oder Abtragstiefe bei ablatierender Laserbearbeitung möglich.

## BEZUGSZEICHENLISTE

| | |
|---|---|
| 1, 2 | erstes, zweites optisches Element |
| 1.1, 2.1 | Freiformfläche |
| 1.2, 2.2 | Planfläche |
| 1.1.1, 2.1.1 | Referenzpunkt |
| 10 | Laseroptik |
| 11 | Laserquelle |
| 12 | Werkstück |
| 12.1, 12.2, 12.3 | erste, zweite, dritte Bearbeitungsfläche |

| | |
|---|---|
| AS | Ausgangsstrahlen |
| B | Auffangebene |
| ES | Eingangsstrahlen |
| F | Strahlformer |

S      Strahl
$x$      erste Achse
$\Delta x$      relative Verschiebung
$y$      zweite Achse
$z$      optische Achse
$\Delta z(x, y)$      Höhenprofil
$x_S, y_S$      Eintrittsort

$$x_S' ,\ y_S'$$      Austrittsort

**Patentansprüche**

1.  Strahlformer (F) mit einem ersten optischen Element (1) und einem zweiten optischen Element (2), die entlang einer optischen Achse ($z$) hintereinander angeordnet sind, wobei das erste und das zweite optische Element (1, 2) jeweils mindestens eine optisch wirksame Freiformfläche (1.1, 2.1) aufweist, wobei das erste und das zweite optische Element (1, 2) gegeneinander entlang mindestens einer zur optischen Achse ($z$) senkrecht angeordneten Achse ($x$) um eine relative Verschiebung ($\Delta x$) verschiebbar angeordnet sind und wobei die optisch wirksamen Freiformflächen (1.1, 2.1) ein Höhenprofil ($\Delta z(x, y)$) aufweisen, das als Polynomentwicklung beschreibbar ist, die in endlich vielen Polynomordnungen von Null verschiedene Polynomkoeffizienten aufweist, wobei mindestens ein einer Polynomordnung größer als Drei zugeordneter Polynomkoeffizient von Null verschieden ist und wobei die Höhenprofile ($\Delta z(x, y)$) der mindestens zwei Freiformflächen (1.1, 2.1) so gewählt sind, dass rotationssymmetrisch um die optische Achse ($z$) mit einem gaußförmigen Strahldichteprofil verteilte Eingangsstrahlen (ES) in Ausgangsstrahlen (AS) gebrochen werden, welche in einer in einem Fokusabstand angeordneten Auffangebene (B, B') innerhalb eines rechteckigen Querschnitts begrenzt und innerhalb dieses rechteckigen Querschnitts gleichförmig um die optische Achse ($z$) verteilt sind, **dadurch gekennzeichnet, dass** das Höhenprofil ($\Delta z(x, y)$) einer Freiformfläche (1.1) des ersten optischen Elements (1) und das Höhenprofil ($\Delta z(x, y)$) einer Freiformfläche (1.2) des zweiten optischen Elements (2) so gewählt sind, dass der Abstand der Auffangebene (B, B') sowie der Umfang des begrenzenden rechteckigen Querschnitts durch relative Verschiebung ($\Delta x$) des ersten und des zweiten optischen Elements (1, 2) gegeneinander veränderbar sind.

2.  Strahlformer (F) nach Anspruch 1, **dadurch gekennzeichnet, dass** der begrenzende rechteckige Querschnitt quadratisch ist.

3.  Strahlformer (F) nach einem der vorangehenden Ansprüche, **dadurch gekennzeichnet, dass** das Höhenprofil ($\Delta z(x, y)$) der ersten und zweiten Freiformfläche (1.1, 2.1) antisymmetrisch bezüglich einer Drehung um 180 Grad um die optische Achse ($z$) ausgebildet und aufeinander zuweisend angeordnet sind.

4.  Strahlformer (F) nach einem der vorangehenden Ansprüche, **dadurch gekennzeichnet, dass** die optischen Elemente (1, 2) aus Kieselglas gefertigt sind.

5.  Laseroptik (10) umfassend eine Laserquelle (11) und einen entlang einer optischen Achse ($z$) nachgeordneten Strahlformer (F) nach einem der vorangehenden Ansprüche, wobei die Laserquelle (11) zur Abgabe von kollimiertem Laserlicht mit einem rotationssymmetrisch um die optische Achse ($z$) gaußförmigen Strahldichteprofil eingerichtet ist.

**Claims**

1.  Beam shaper (F) having a first optical element (1) and a second optical element (2), which are arranged one behind the other along an optical axis (z), wherein the first and the second optical element (1, 2) each have at least one optically effective free-form surface (1.1, 2.1), wherein the first and the second optical element (1, 2) are arranged so as to be displaceable relative to one another by a relative displacement ($\Delta x$) along at least one axis (x) arranged perpendicularly to the optical axis (z) and wherein the optically effective free-form surfaces (1.1, 2.1) have a height profile ($\Delta z(x,y)$) that is describable as a polynomial expansion that has non-zero polynomial coefficients in a finite number of polynomial orders, wherein at least one polynomial coefficient, which is assigned to a polynomial order greater than three, differs from zero, and wherein the height profiles ($\Delta z(x,y)$) of the at least two free-form surfaces (1.1, 2.1) are selected such that incoming beams (ES), which are distributed rotationally symmetrically about the optical axis (z) with a Gaussian radiance density profile, are refracted into exit beams (AS), which are delimited in a collection plane (B, B'), arranged at a focal distance, within a rectangular cross section and are distributed uniformly about the optical axis (z) within said rectangular cross section, **characterized in that** the height profile ($\Delta z(x,y)$) of a free-form surface (1.1) of the first optical element (1) and the height profile ($\Delta z(x,y)$) of a free-form surface (1.2) of the second optical element (2) are selected such that the distance of the collection plane (B, B') and the perimeter of the delimiting rectangular cross section are changeable by a relative displacement ($\Delta x$) of the first and of the second optical element (1, 2) with respect to one another.

**2.** Beam shaper (F) according to Claim 1, **characterized in that** the delimiting rectangular cross section is square.

**3.** Beam shaper (F) according to either of the preceding claims, **characterized in that** the height profiles ($\Delta z(x,y)$) of the first and second free-form surfaces (1.1, 2.1) are embodied to be anti-symmetrical with respect to a rotation by 180° about the optical axis (z) and are arranged so as to face one another.

**4.** Beam shaper (F) according to one of the preceding claims, **characterized in that** the optical elements (1, 2) are made from silica glass.

**5.** Laser optical unit (10) comprising a laser source (11) and a beam shaper (F) according to one of the preceding claims, which is arranged downstream along an optical axis (z), wherein the laser source (11) is configured for emitting collimated laser light having a radiance density profile that is rotationally symmetrically Gaussian about the optical axis (z).

**Revendications**

**1.** Conformateur de faisceau (F) comprenant un premier élément optique (1) et un deuxième élément optique (2), lesquels sont disposés l'un derrière l'autre le long d'un axe optique (z), les premier et deuxième éléments optiques (1, 2) comportant chacun au moins une surface de forme libre (1.1, 2.1) optiquement active, les premier et deuxième éléments optiques (1, 2) étant disposés de manière à pouvoir se déplacer l'un par rapport à l'autre d'un déplacement relatif ($\Delta x$) le long d'au moins un axe (x) disposé perpendiculairement à l'axe optique (z), et les surfaces de forme libre (1.1, 2.1) optiquement actives présentant un profil en hauteur ($\Delta z(x, y)$) qui peut être décrit comme un développement polynomial qui comporte des coefficients polynomiaux différents de zéro dans un nombre fini d'ordres polynomiaux, au moins un coefficient polynomial associé à un ordre polynomial supérieur à trois étant différent de zéro et les profils en hauteur ($\Delta z(x, y)$) des au moins deux surfaces de forme libre (1.1, 2.1) étant choisis de telle sorte que des faisceaux d'entrée (ES), répartis à symétrie de révolution autour de l'axe optique (z) avec un profil de densité de radiance gaussien, soient réfractés en faisceaux de sortie (AS) qui sont limités à l'intérieur d'une section transversale rectangulaire dans un plan collecteur (B, B') disposé à une distance focale et soient uniformément répartis autour de l'axe optique (z) à l'intérieur de cette section transversale rectangulaire, **caractérisé en ce que** le profil en hauteur ($\Delta z(x, y)$) d'une surface de forme libre (1.1) du premier élément optique (1) et le profil en hauteur ($\Delta z(x, y)$) d'une surface de forme libre (1.2) du deuxième élément optique (2) sont choisis de telle sorte que la distance du plan collecteur (B, B') et la périphérie de la section rectangulaire de limitation puisse être modifiée par un déplacement relatif ($\Delta x$) des premier et deuxième éléments optiques (1, 2) l'un par rapport à l'autre.

**2.** Conformateur de faisceau (F) selon la revendication 1, **caractérisé en ce que** la section rectangulaire de limitation est carrée.

**3.** Conformateur de faisceau (F) selon l'une des revendications précédentes, **caractérisé en ce que** les profils en hauteur ($\Delta z(x, y)$) des première et deuxième surfaces de forme libre (1.1, 2.1) sont conçus pour être antisymétriques par rapport à une rotation de 180 degrés autour de l'axe optique (z) et sont disposés de manière à être affectés l'un à l'autre.

**4.** Conformateur de faisceau (F) selon l'une des revendications précédentes, **caractérisé en ce que** les éléments optiques (1, 2) sont en verre de silice.

**5.** Optique laser (10) comprenant une source laser (11) et un conformateur de faisceau (F), disposé en aval le long d'un axe optique (z), selon l'une des revendications précédentes, la source laser (11) étant conçue pour délivrer une lumière laser collimatée ayant un profil de densité de radiance gaussien à symétrie de révolution autour de l'axe optique (z).

FIG 1

FIG 2

FIG 3

FIG 4A

FIG 4B

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **T. J. SULESKI ; J. A. SHULTZ ; P. J. SMILIE.** Design of Dynamic Freeform Optics. *Renewable Energy and the Environment,* 2013, ISBN 978-1-55752-986-2
- **P. J. SMILIE ; T. J. SULESKI.** Variable-diameter refractive beam shaping with freeform optical surfaces. *Optics Letters,* November 2011, vol. 36 (21), ISSN 0146-9592, 4170-4172
- **T. J. SULESKI ; J. A. SHULTZ ; P. J. SMILIE.** Dynamic beam shaping with freeform optics. *Visual Communications and Image Processing,* 2014, vol. 9194, ISBN 978-1-62841-730-2
- Lateral-shift variable aberration generators. **PALUSINSKI et al.** APPLIED OPTICS. OPTICAL SOCIETY OF AMERICA, 01. Januar 1999, vol. 38, 86-90
- Aberration analysis of optimized Alvarez - Lohmann lenses. **GREWE, A. et al.** APPLIED OPTICS. OPTICAL SOCIETY OF AMERICA, 01. November 2014, vol. 53, 7498-7506